# EUROPEAN PATENT SPECIFICATION

(11) **EP 1 669 623 B1**
(45) Date of publication and mention of the grant of the patent: **06.05.2009**
(21) Application number: 05027108.9
(22) Date of filing: 12.12.2005
(51) Int. Cl.: F16D 28/00

(54) **Clutch actuator and saddle-ride type vehicle**
Kupplungsbetätigungsvorrichtung und Motorfahrrad
Dispositif d'actionnement d'embrayage et motocyclette

(30) Priority: 10.12.2004 JP 2004359227
(43) Date of publication of application: 14.06.2006
(60) Divisional application: 09003057.8
(73) Proprietor: Yamaha Hatsudoki Kabushiki Kaisha, Iwata-shi, Shizuoka-ken (JP)
(72) Inventor: Kosugi, Makoto, Iwata-shi Shizuoka-ken (JP)
(74) Representative: Grünecker, Kinkeldey, Stockmair & Schwanhäusser Anwaltssozietät

(56) References cited:
- DE-A1- 3 714 211
- DE-A1- 19 939 378
- FR-A- 2 523 743
- GB-A- 2 313 885

## Description

The present invention relates to a clutch according to the preamble of independent claim 1.

Such a clutch actuator can be taken from DE 37 14 211 A1. Said prior art document discloses a clutch actuator for a double clutch system of a motor vehicle. Said clutch actuator comprises a master cylinder with a piston push rod, which is eccentrically connected to a rotating member. Further, two spring members are provided, which are respectively eccentrically connected to said rotating member. By action of a motor, said rotating member is rotatable. When the clutch is engaged, the springs are biasing the rotating member in the direction of clutch engagement. After the motor has turned the rotating member to move the point of engagement between the spring and the rotating member over a horizontal line, the force exerted by the first spring pushes the rotating member in the direction of clutch disengagement, whereas the force exerted by the second spring still pushes the rotating member in the direction of clutch engagement. Only after the motor has turned the rotating member further enough to move the point of engagement of the second spring over the horizontal line, both springs push the rotating member in the direction of clutch disengagement.

Document FR 2 523 743 discloses a control device for a friction clutch having a clutch disengagement abutment configured to apply force on an elastic member of the clutch to cancel a clamping action of the clutch. The clutch disengagement abutment is movable by a lever, which is pivotally supported a fixed pivot. Further, two spring members are attached to a distal end of said lever, wherein the first spring pulls always in the direction of disengagement, and wherein the second spring acts in the direction towards engagement when the lever is the engaged position, and acts in the direction of disengagement when the lever is arranged in the disengaged position.

Document GB 2 313 885 discloses an operating device for control of a friction clutch of an automatically engageable and disengageable torque transfer system, comprising a drive unit having a motor output shaft with a worm gear driven by a worm wheel. A crank rod is eccentrically connected to said worm wheel. Further, an element having a curved profile is secured to the worm wheel, such that the worm wheel is forced by biased through the curved profile.

Clutch actuators use an actuator such as motor, etc. to cause a clutch mounted on a vehicle to perform motions of connection and disconnection. Normally, a force in a direction of clutch connection acts on a clutch, and in order to use a motor, etc. to actuate the clutch, it is necessary to increase output thereof. Some of such clutch actuators comprises elastic auxiliary means and enables reducing an output of an actuator such as motor, etc. by canceling a part of the force in the direction of clutch connection by an elastic force of the elastic auxiliary means (see JP-T-2000-501826).

With the related art, however, the force in the direction of clutch connection and an elastic force of the elastic auxiliary means are caused to balance each other in a state of clutch connection, so that the force in the direction of clutch connection does not act on the clutch in the state of clutch connection. As a result, the related art involves a problem that the state of clutch connection is insufficient in stability.

The invention has been thought of in view of the problem and has its object to provide a clutch as indicated above capable of stabilizing a state of clutch connection, and a saddle-ride type vehicle provided with the same.

According to the present invention said object is solved by an clutch having the features of independent claim 1. Preferred embodiments are laid down in the dependent claims.

Accordingly, it is provided a clutch actuator for operating a clutch, said clutch actuator comprising a rotating member, wherein a clutch operating member and an elastic expansion member are configured to individually exert torque on the rotating member, wherein when the rotating member rotates in a first direction to move the clutch operating member in a direction of clutch connection, the elastic expansion member and the clutch operating member bias the rotating member in the first direction at a rotational position of the rotating member, in which the clutch is put in a connected state.

Preferably, the clutch operating member and the elastic expansion member are pivotally supported on the rotating member at individual locations separate from a rotating shaft of the rotating member. Alternatively, it is preferable if the clutch operating member is provided as an outwardly extending piston pushing part of the rotating member and the elastic expansion member is pivotally supported on the rotating member.

Further, preferably the rotating member is rotatably journaled and is rotationally driven by an actuator.

Still further, preferably one end of the clutch operating member is pushed by a push force of a clutch spring provided on the clutch and the other end of the clutch operating member is pivotally supported on the rotating member in a position separate from a rotating shaft of the rotating member by a shaft parallel to the rotating shaft, wherein the clutch operating member puts the clutch in a disconnected state against the push force of the clutch spring.

Beneficially, one end of the elastic expansion member is supported on a vehicle side and the other end of the elastic expansion member is pivotally supported on the rotating member in a position separate from a rotating shaft of the rotating member by a shaft parallel to the rotating shaft, wherein the elastic expansion member comprises an elastic member and extends or contracts by itself.

Yet further, beneficially the clutch operating member biases the rotating member to rotate the same in the first direction at a rotational position, in which the clutch is put in a semi-clutched state, the elastic expansion member biases the rotating member to rotate the same in the second direction in the case where the clutch is put in a semi-clutched state, and in the case where the clutch is put in a semi-clutched state, torque, with which the clutch operating member biases the rotating member to rotate the same in the first direction, and torque, with which the elastic expansion member biases the rotating member to rotate the same in the second direction, balance each other.

According to another preferred embodiment, the rotating member comprises integrally therewith a worm wheel that rotates on the rotating shaft, and the actuator comprises a worm gear that meshes with the worm wheel and is rotated by a motor.

According to yet another preferred embodiment, the clutch actuator further comprises a manual rotating part that manually rotates the rotating member.

According to still another preferred embodiment, the clutch actuator further comprises a base member fixed to a saddle-ride type vehicle, and wherein the base member mounts thereon the actuator and the rotating member.

The objective is further solved by a saddle-ride type vehicle comprising the clutch according to one of the above embodiments.

In the following, the present invention is explained in greater detail with respect to several embodiments thereof in conjunction with the accompanying drawings, wherein:
- Fig. 1: is a side view showing an outward appearance of a saddle-ride type vehicle according to an embodiment,
- Fig. 2: is a view schematically showing a whole construction of a control system according to the embodiment,
- Fig. 3: is a perspective view showing an outward appearance of an essential part of a clutch actuator,
- Fig. 4: is a longitudinal, cross sectional view showing the clutch actuator at the time of clutch connection,
- Fig. 5: is a longitudinal, cross sectional view showing the clutch actuator at the time of clutch disconnection,
- Fig. 6: is a view showing a motion of a manipulation arm,
- Fig. 7: is a view showing a motion of the manipulation arm,
- Fig. 8: is a graph illustrating the relationship among torque imparted to a rotating member from a clutch side, torque imparted to a rotating member by an auxiliary spring, and a composite torque thereof, and
- Fig. 9: is a view showing a modified mechanism of a clutch actuator.

An embodiment will be described below in detail with reference to the drawings.

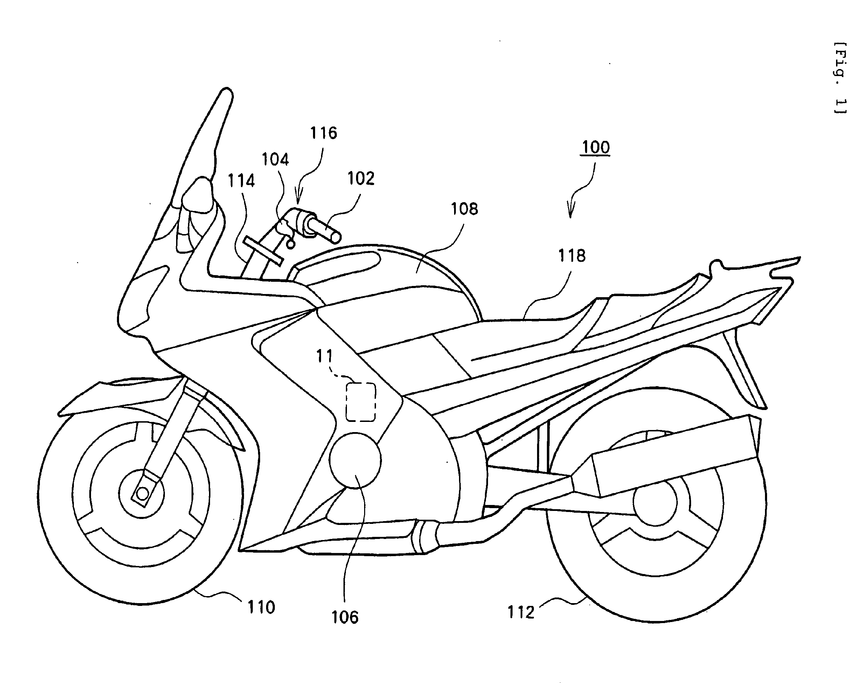

Fig. 1 is a side view showing an outward appearance of a motorcycle according to an embodiment. The motorcycle 100 shown in the figure is an embodiment of a saddle-ride type vehicle and comprises a front wheel 110 and a rear wheel 112, and a handle 116 extending transversely to a vehicle traveling direction is mounted to a top of a front fork 114 mounted to the front wheel 110. The handle 116 mounts at one end thereof a grip 102 and a clutch lever 104 and at the other end thereof an accelerator grip and a brake lever (not shown). Also, a seat 118 is provided on an upper portion of the motorcycle 100 and a rider can get on the motorcycle 100 straddling the seat 118. The motorcycle 100 is substantially the same in construction as known motorcycles, and has a feature in that a clutch actuator 11, which uses a motor to operate a clutch provided in a crankcase of an engine 106, is mounted above the engine 106, that is, below a fuel tank 108. The clutch actuator 11 is controlled in operation by a control device (not shown), and the clutch actuator 11 pertorms motions of connection and disconnection of the clutch not by human power but by means of a drive force such as electric power or the like. Also, the clutch lever 104 is connected to the clutch actuator 11 by means of a length of wire, so that connection and disconnection of the clutch can be also performed by the clutch lever 104.

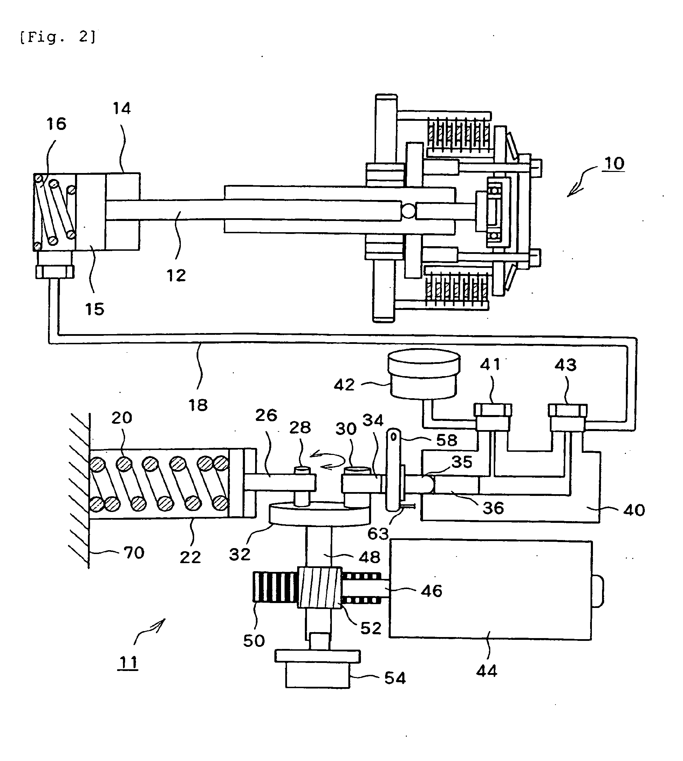

Fig. 2 is a view schematically showing a whole construction of a clutch control system mounted on the motorcycle 100. With the clutch control system shown in the figure, for example, a wet type multiple-disc clutch 10 is accommodated in a crankcase of the engine 106. The clutch actuator 11 can put the clutch 10 in a disconnected state or in a connected state through the medium of a push rod 12. The clutch 10 comprises a clutch spring, of which a biasing force pushes clutch discs, which are joined to a crankshaft (on a drive side), against friction discs joined to a transmission main shaft (on a driven side). Therefore, the clutch 10 is put in a connected state at a normal time. The clutch 10 can be put in a semi-clutched state by pushing the push rod 12 toward the clutch 10 against the push force of the clutch spring, and put in a disconnected state by further pushing the push rod 12.

With the clutch control system according to the embodiment, the push rod 12 of the clutch 10 is pushed by a hydraulic mechanism. The hydraulic mechanism comprises an oil hose 18 for communication of an oil, a clutch release cylinder 14 connected to one end of the oil hose, and a master cylinder 40 connected to the other end of the oil hose through a connector 43. Built in the clutch release cylinder 14 are a piston 15 that is pushed by an oil flowing from the oil hose 18, and a clutch release spring 16 that biases the piston 15 toward the clutch 10. When the oil inflows from the oil hose 18, the piston 15 is moved toward the clutch 10 to thereby push the push rod 12. As a result, the clutch 10 is put in a semi-clutched state or in a disconnected state. Also, when inflow of the oil from the master cylinder 40 disappears, the push rod 12 is pushed back by the clutch spring, the piston 15 also returns to an original position, and the clutch 10 returns to a connected state.

A reservoir tank 42 is connected to the master cylinder 40 through a connector 41, and a hydraulic correcting function is realized by the reservoir tank 42. That is, an oil accumulated in the reservoir tank 42 flows into the master cylinder 40 according to that volume change of an oil in the hydraulic mechanism, which is caused by abrasion of the clutch 10, temperature, etc., or an oil in the master cylinder 40 is recovered by the reservoir tank 42. A piston 36 is received in the master cylinder 40, and the piston 36 is pushed from outside to thereby push out an oil in the master cylinder 40 to cause the oil to flow into the clutch release cylinder 14 through the oil hose 18.

A clutch actuator 11 according to the embodiment comprises a master cylinder 40, and a mechanism that that pushes a piston 36 of the master cylinder 40 and releases such push. Specifically, the piston 36 of the master cylinder 40 is pushed by a first piston push rod 35 (a clutch operating member, a first piston push mechanism), and a manipulation arm 58 and a second piston push rod 34 are provided in a manner to be able to abut independently against the first piston push rod 35. The manipulation arm 58 is connected to the clutch lever 104 through a length of wire 63, and when a rider of a saddle-ride type vehicle manipulates the clutch lever 104, the manipulation arm 58 is moved by the wire 63. Thereby, the manipulation arm 58 pushes the first piston push rod 35 and the piston 36 is pushed toward the interior of the master cylinder 40. Also, when the rider returns the clutch lever 104 to its original position, the manipulation arm 58 is returned to its initial position whereby the piston 36 is also returned to its original position.

The second piston push rod 34 is driven by the motor 44 (actuator) to push the first piston push rod 35 independently of the manipulation arm 58 whereby the piston 36 is pushed toward the interior of the master cylinder 40. Also, when motor 44 rotates reversely, the second piston push rod 34 returns to its initial position (a clutch connection position) and the clutch 10 correspondingly returns to a connected state.

More specifically, the second piston push rod 34 has one end thereof abutting against a head of the first piston push rod 35 and has the other end thereof journaled rotatably on a rotating member 32 through a rotating shaft 30. The rotating member 32 is rotationally driven by the motor 44 and journaled rotatably by an actuator casing 70, in which respective elements of the clutch actuator 11 are accommodated. The rotating shaft 30 of the second piston push rod 34 is provided in parallel to and away from a rotating shaft 48 of the rotating member 32. The rotating shaft 48 mounts thereto a worm wheel 50, and the worm wheel 50 and the rotating member 32 rotate together on the rotating shaft 48. A worm gear 52 meshes with the worm wheel 50. The worm gear 52 is joined to the motor 44 through a rotating shaft 46 of the motor 44 to be rotated by the motor 44. Thus the clutch actuator 11 converts rotational drive of the motor 44 into rotational drive of the rotating member 32.

As described above, a force that operates the clutch 10 in a direction of connection is applied to the push rod 12 by the clutch spring provided in the clutch 10. Therefore, in order to cause the second piston push rod 34 to push the piston 36, the motor 44 must rotate the rotating member 32 against such force. Hereupon, with the clutch actuator 11, an auxiliary spring 22 is further mounted to the rotating member 32 to be able to decrease output of the motor 44. That is, the rotating member 32 comprises a rotating shaft 28 for mounting of the auxiliary spring 22, in addition to the rotating shaft 30 for mounting of the second piston push rod 34. The rotating shaft 28 is also provided in parallel to and away from the rotating shaft 48 of the rotating member 32. The auxiliary spring 22 comprises a first auxiliary spring shaft 26, and one end of the first auxiliary spring shaft 26 is supported rotatably on the rotating shaft 28. Also, the other end of the auxiliary spring 22 abuts against an inner wall of the actuator casing 70, in which respective elements of the clutch actuator 11 are accommodated. Built in the auxiliary spring 22 is a coil spring 20 that is contracted in a state to be shorter than a natural length and acts to expand independently. One end of the auxiliary spring 22 is supported by the inner wall of the actuator casing 70 fixed on a vehicle side and the other end thereof pushes the first auxiliary spring shaft 26 toward the rotating member 32. That is, an elastic force of the coil spring 20 causes the first auxiliary spring shaft 26 to push the rotating shaft 28 in a direction of expansion, thus imparting an auxiliary torque to the rotating shaft 28.

In addition, a worm wheel 50 mounts thereto a clutch potentiometer 54 composed of a resistor, etc., so that a voltage value corresponding to a rotating angle of the rotating member 32 can be output. The voltage value is input into a control device, which is not shown and comprises a microcomputer and the like, to be used for control of an operation of the motor 44 or the like. That is, the control device determines a rotating angle of the rotating member 32 from an output voltage of the clutch potentiometer 54 to be able to set the rotating member 32 to an optional rotating angle between a rotating angle (a rotating angle of connection) corresponding to a position of connection of the clutch 10 and a rotating angle (a rotating angle of disconnection) corresponding to a position of disconnection of the clutch 10. In addition, rotation of the rotating shaft 46 of the motor 44 may be detected to be used for control.

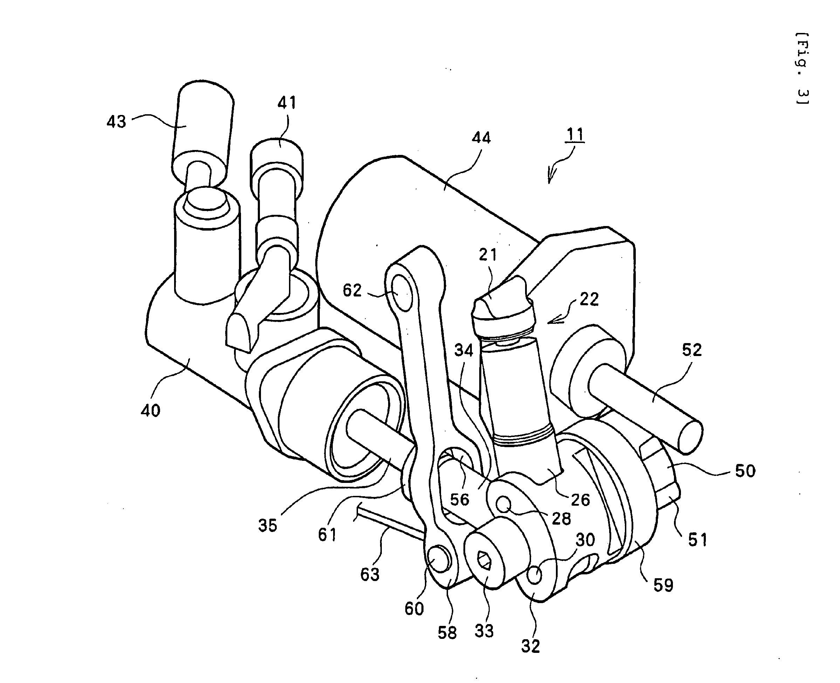

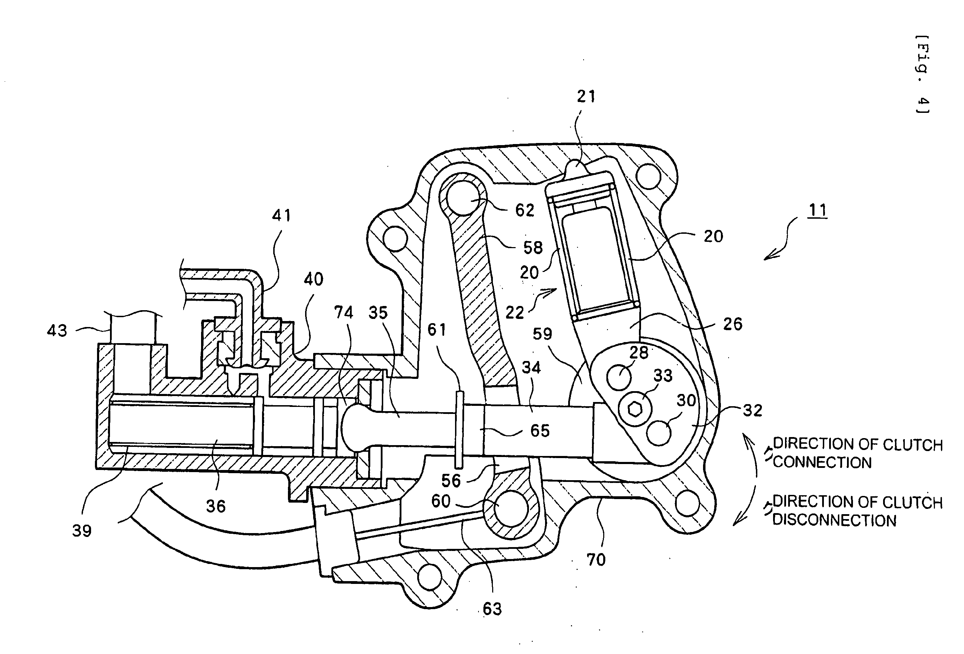

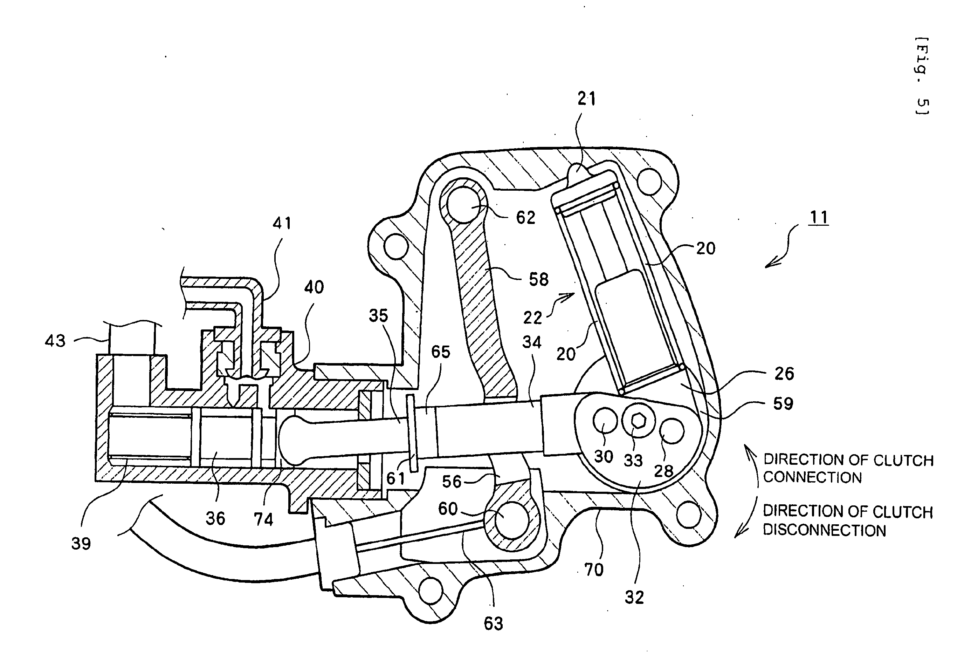

A further explanation is given to the clutch actuator 11. Fig. 3 is a perspective view showing an outward appearance of an essential part of the clutch actuator 11. Fig. 4 is a longitudinal, cross sectional view showing the clutch actuator 11 at the time of clutch connection. Further, Fig. 5 is a longitudinal, cross sectional view showing the clutch actuator 11 at the time of clutch disconnection. In Fig. 3, illustration of the actuator casing 70 and the coil spring 20 is omitted, and in Figs. 4 and 5, the motor 44, rotation restricting members 51, the worm wheel 50, and the worm gear 52 hide behind the actuator casing 70 and so are not shown.

The actuator casing 70 is shaped such that partitions are provided upright around a periphery of a flat bottom plate, and accommodates therein respective elements centering around the rotating member 32. That is, a bearing 52 is fitted into a recess provided with an opening and formed on a bottom of the actuator casing 70, and the rotating shaft 48 of the rotating member 32 is inserted through the bearing. The auxiliary spring 22 comprises the first auxiliary spring shaft 26 and a second auxiliary spring shaft 21. The first auxiliary spring shaft 26 is cylindrical-shaped at one end thereof and permits one end of the second auxiliary spring shaft 21 to be inserted therethrough, so that the both can move slidingly relative to each other. The coil spring 20 is arranged between the first auxiliary spring shaft 26 and the second auxiliary spring shaft 21, the coil spring 20 biasing the first auxiliary spring shaft 26 and the second auxiliary spring shaft 21 to make the same move slidingly in a direction away from each other. A shaft hole is formed on the other end of the first auxiliary spring shaft 26 and mounted to the rotating shaft 28 of the rotating member 32. Also, the other end of the second auxiliary spring shaft 21 is formed to be mountain-shaped, the mountain-shaped portion being fitted into a recess formed on a side wall of the actuator casing 70. The auxiliary spring 22 is accommodated in the actuator casing 70 with the coil spring 20 being contracted, thus imparting torque to the rotating member 32.

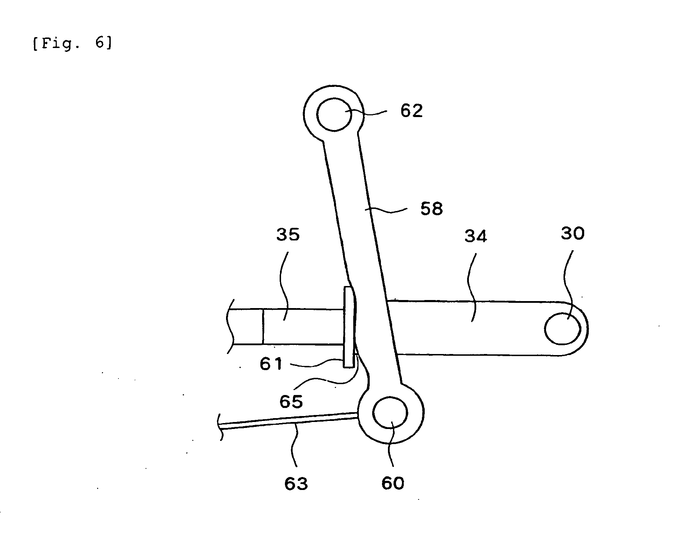

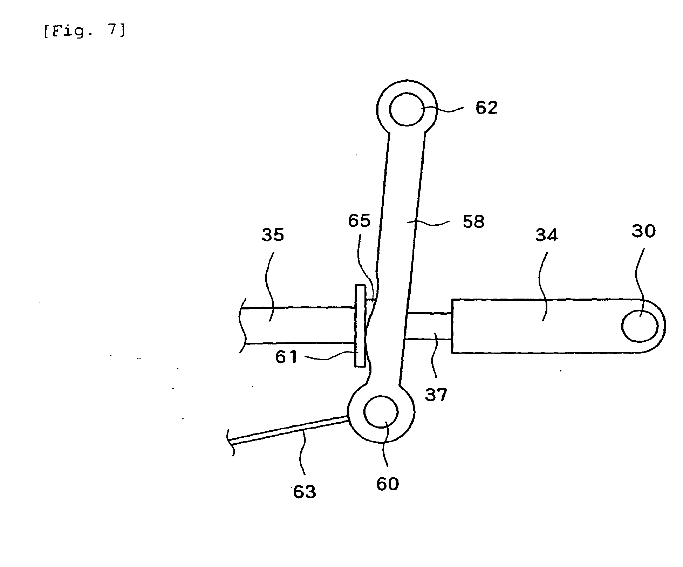

The master cylinder 40 is fitted into the actuator casing 70 from laterally and the first piston push rod 35 enters inside the actuator casing 70. One end of the first piston push rod 35 is formed to be substantially spherical-shaped, the one end being held by a cup 74 connected to the piston 36. The cup 74 and the substantially spherical-shaped end enable the first piston push rod 35 to push the piston 36 in a postural range of some measure. The bias of the clutch spring and the bias of a master cylinder spring 39 provided in the master cylinder 40 cause the cup 74 to constantly contact with the substantially spherical-shaped end of the first piston push rod 35. As shown in Figs.6 and 7, a somewhat large diameter actuator abutment 65 is formed midway the first piston push rod 35 and an annular arm abutment 61 is formed adjacent a side of the actuator abutment 65 toward the master cylinder 40. The second piston push rod 34 is formed to be bottomed to permit a tip end 37 of the first piston push rod 35 to be inserted therethrough. Thus the first piston push rod 35 can move slidingly relative to the second piston push rod 34, which is pivotally supported on the rotating member 32 through the rotating shaft 30. As described above, the first piston push rod 35 is constantly exerted by a biasing force in a direction, in which the piston 36 is pushed out, that is, in a direction, in which the first piston push rod 35 enters inside the actuator casing 70, so that the first piston push rod 35 is normally put in a state (a pushed position) of being pushed into the second piston push rod 34 to the maximum. Therefore, a tip end surface of the second piston push rod 34 normally abuts against the actuator abutment 65. In the case where the first piston push rod 35 is pushed into the master cylinder 40 by the manipulation arm 58, the first piston push rod 35 comes out from the second piston push rod 34. In this case, engagement of the tip end surface of the second piston push rod 34 with the actuator abutment 65 is released.

One end of the manipulation arm 58 is pivotally supported on a rotating shaft 62 fixed to the bottom of the actuator casing 70. Also, the other end of the manipulation arm mounts thereto a length of wire 63 connected to the clutch lever 104 via a pin 60. That is, the manipulation arm 58 is extended from a position of the rotating shaft 62 to a position of an end of the wire 63. An opening 56 is formed midway the manipulation arm 58 and the second piston push rod 34 is inserted through the opening 56. As described above, the first piston push rod 35 is inserted into the tip end of the second piston push rod 34 and the arm abutment 61 is positioned on a side of the opening 56 toward the master cylinder 40. Therefore, when the clutch lever 104 is manipulated to move a tip end (toward the pin 60) of the manipulation arm toward the master cylinder 40, a periphery of the opening 56 abuts against the arm abutment 61 whereby the first piston push rod 35 is pushed into the master cylinder 40.

The rotating member 32 is formed with a rotating member manipulating part 33, and a head of the rotating member manipulating part 33 is formed with a tool hole, into which a tool such as hex wrench, etc. is inserted. The tool hole is formed to be concentric with the rotating shaft 48, so that the rotating member 32 can be rotated manually and forcedly from outside by inserting a tool into the tool hole. In addition, the rotating shaft 46 of the motor 44 may be manually rotated from outside to thereby rotate the rotating member 32 forcedly.

Also, the rotating shaft 48 of the rotating member 32 is inserted through the bearing 59 and a tip end thereof is positioned on the back side of the bottom plate of the actuator casing 70. The worm wheel 50 is mounted to the tip end of the rotating shaft 48. The worm wheel 50 is formed with teeth, which are necessary and sufficient to rotate the rotating member 32 from a rotating angle of connection to a rotating angle of disconnection, and the remainder of the worm wheel is not formed with teeth. Formed on a back surface side of the bottom of the actuator casing 70 are a pair of rotation restricting members 51 (only one of them being shown in Fig. 3) adjacent to a region, in which the teeth formed on the worm wheel 50 are movable. When the rotating member 32 reaches the rotating angle of connection, one side of the teeth of the worm wheel 50 abuts against one of the rotation restricting members 51 to restrict further rotation. Also, when the rotating member 32 reaches the rotating angle of disconnection, the other side of the teeth of the worm wheel 50 abuts against the other of the rotation restricting members 51 to restrict further rotation.

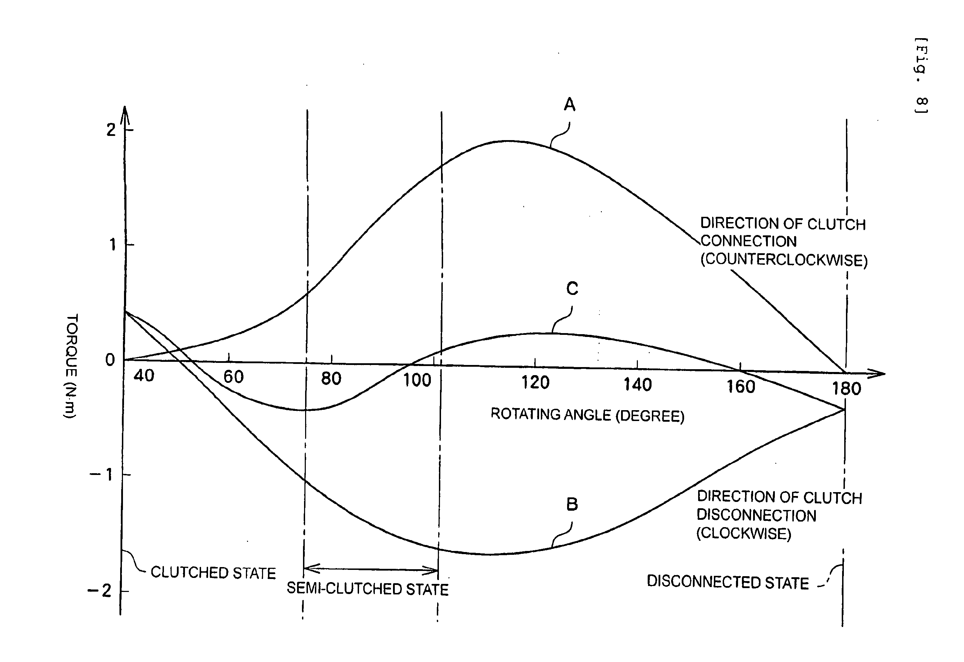

An explanation is given to torque acting on the rotating member 32. Fig. 8 is a graph illustrating the relationship among torque (a curve A in the figure) imparted to the rotating member 32 by the second piston push rod 34, torque (a curve B in the figure) imparted to the rotating member 32 by the auxiliary spring 22, and a composite torque thereof (a curve C in the figure). An axis of ordinate in the figure indicates a torque value, and torque having a negative value acts to rotate the rotating member 32 rightward in Figs. 4 and 5 to push the second piston push rod 34 toward the master cylinder 40, thereby effecting disconnection of the clutch 10. Also, torque having a positive value acts to rotate the rotating member 32 leftward in Figs. 4 and 5 to return the second piston push rod 34 to its original position from a side of the master cylinder 40, thereby effecting connection of the clutch 10. An axis of abscissa in the figure indicates a rotating angle of the rotating member 32 with a rotating angle of connection being 40 degrees and a rotating angle of disconnection being 180 degrees.

As indicated by the curve A in the figure, the clutch spring has a natural length in a connected state of the clutch 10 and torque imparted to the rotating member 32 by the second piston push rod 34 is zero at the rotating angle of connection. Thereafter, when the rotating member 32 is rotated in a direction of clutch disconnection, torque gradually increases and torque in a direction of clutch connection is generated. Thereafter, as the rotating member 32 is rotated, the rotating shaft 48 of the rotating member 32 approaches in a direction, in which the second piston push rod 34 is extended, and torque imparted to the rotating member 32 by the second piston push rod 34 begins to decrease. In a disconnected state of the clutch 10, the clutch spring is put in a state of being contracted most but the rotating shaft 48 of the rotating member 32 is positioned on an extension of the second piston push rod 34 and torque imparted to the rotating member 32 by the second piston push rod 34 becomes zero.

Also, as indicated by the curve B in the figure, torque in a direction of connection is imparted to the rotating member 32 by the auxiliary spring 22 in a connected state of the clutch 10. When the rotating member 32 is rotated in a direction of clutch disconnection, torque becomes zero and when the rotating member is further rotated, torque becomes negative. That is, a position of the auxiliary spring 22 and a position of the rotating shaft 28 are regulated so that torque in a direction of clutch connection is imparted to the rotating member 32 at the rotating angle of connection of the rotating member 32 and torque in a direction of clutch disconnection is imparted to the rotating member 32 at a rotating angle, at which the clutch 10 is put in a semi-clutched state. Thereafter, when the rotating member 32 is rotated in a direction of clutch disconnection, torque in a direction of clutch disconnection is increased as a direction, in which the auxiliary spring 22 is extended, separates from the rotating shaft 48 of the rotating member 32. When the rotating member 32 is further rotated, the auxiliary spring 22 approaches a natural length this time and torque in a direction of clutch disconnection returns to a small value.

As indicated by the curve C in the figure, in a major part of an angular range of the rotating member 32, torque imparted by the second piston push rod 34 and torque imparted by the auxiliary spring 22 act in opposite directions to decrease each other. Therefore, an absolute value of torque imparted to the rotating member 32 becomes a small value, so that the rotating member 32 can be readily rotationally driven by the motor 44. Also, at the rotating angle of connection, a composite torque acts in a direction of clutch connection. Therefore, it is possible to make the clutch 10 stable in a connected state. Also, at the rotating angle of disconnection, a composite torque acts in a direction of clutch disconnection. Therefore, it is possible to make the clutch 10 stable in a disconnected state. Further, at a rotating angle corresponding to the semi-clutched state of the clutch 10, when the rotating member 32 is rotated in a direction of clutch disconnection, torque in a direction of clutch connection is generated, and on the other hand, when the rotating member 32 is rotated in a direction of clutch connection, torque in a direction of clutch disconnection is generated. Therefore, it is possible to make the clutch 10 stable in the semi-clutched state.

That is, with the clutch actuator 11 according to the embodiment, even when the motor 44 does not apply a drive force on the rotating member 32, the rotating member 32 is made stable at three rotating angles, that is, the rotating angle of connection, a rotating angle corresponding to the semi-clutched state, and the rotating angle of disconnection.

Further, the rotating member 32 is actually made stable at all rotating angles. That is, various frictions are actually generated in the clutch control system. Also, a self-locking effect of a certain degree is produced in the worm wheel 50 and a worm gear 52, so that even when torque is imparted to the rotating member 32, the worm gear 52 acts to make it difficult for the rotating member 32 to rotate. As described above, with the clutch actuator 11, a composite torque acting on the rotating member 32 becomes a small value even in either directions of rotation, so that the clutch actuator 11 can maintain a state of the clutch 10 as it is even when the motor 44 stops at any rotating angle of the rotating member 32.

Further, with the clutch control system according to the embodiment, the hydraulic mechanism causes motions of connection and disconnection of the clutch 10 and the piston 36 of the master cylinder 40 included in the hydraulic mechanism can be pushed by either the second piston push rod 34 driven by the motor 44 or the manipulation arm 58, connection and disconnection of the clutch 10 can be made stably by manipulation or the motor 44 even when the clutch 10 wears and an oil in the hydraulic mechanism is varied in volume. Also, it suffices that the reservoir tank 42 be connected to the master cylinder 40, so that it is not necessary to make the device complicate in construction.

In particular, in a state, in which the clutch lever 104 is not manipulated, the manipulation arm 58 is in a position (an initial position), in which the first piston push rod 35 is not pushed. In a state, in which the clutch lever 104 is manipulated, the manipulation arm 58 pushes the first piston push rod 35 into the master cylinder 40 whereby the first piston push rod 35 is pulled out from the second piston push rod 34 and the actuator abutment 65 is separated from the tip end surface of the second piston push rod 34. Also, when the rotating member 32 is rotated in a direction of clutch disconnection, the first piston push rod 35 is pushed into the master cylinder 40 and the actuator abutment 65 is separated from the opening 56 of the manipulation arm 58. Therefore, the second piston push rod 34 and the manipulation arm 58 can push the first piston push rod 35 at all times in the other of the states irrespective of one of the states. Thereby, even in the case where, for example, an engine of the vehicle stops and the drive wheel is locked, it is possible to readily put the clutch 10 in a state of disconnection with the use of the manipulation arm 58.

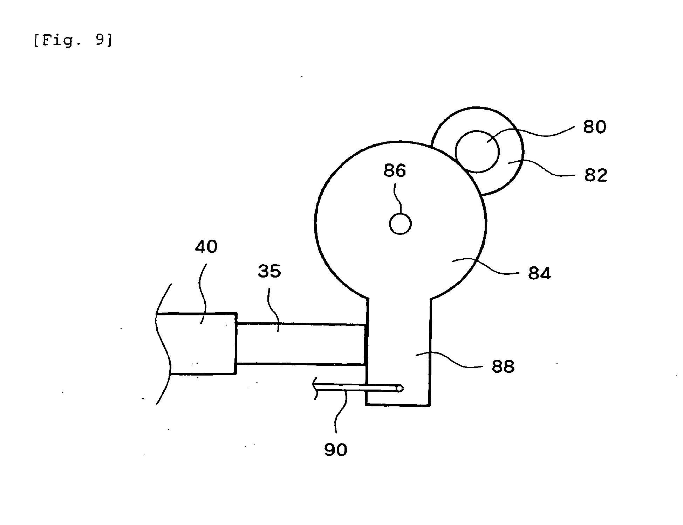

In addition, the teaching of the present invention is not limited to the embodiment described above but susceptible of various modifications. For example, while it is described that the rotating member 32 converts rotational movement of the worm wheel 50 into linear movement of the second piston push rod 34 to thereby push the piston 36 of the master cylinder 40, a motor 82 may rotate a pinion gear 80 as shown in Fig. 9 whereby a rotating member 84 provided with an outwardly extending piston pushing part 88 may be rotated on a rotating shaft 86. In this manner, without the use of a mechanism for conversion of rotational movement into linear movement, the piston pushing part 88 can be caused to abut against a head of the first piston push rod 35 to push the piston 36. In this case, it is preferable that the piston pushing part 88 mounts at a tip end thereof a length of wire 90 connected at the other end thereof to the clutch lever 104 to enable rotating the rotating member 84 manually.

Further, the embodiment of Fig. 9 comprises the elastic expansion member as discussed for the above embodiment, e.g. shown in Figs. 1 and 2. The functionality and design of this elastic expansion member equals to the functionality and design of the above embodiment.

The description above discloses (amongst others) an embodiment of a clutch actuator comprising a rotating member rotatably journaled and rotationally driven by an actuator, a clutch operating member, one end of which is pushed by a push force of a clutch spring provided on a clutch and the other end of which is pivotally supported on the rotating member in a position separate from a rotating shaft of the rotating member by a shaft parallel to the rotating shaft, and which puts the clutch in a disconnected state against the push force of the clutch spring, and an elastic expansion member, one end of which is supported on a vehicle side and the other end of which is pivotally supported on the rotating member in a position separate from the rotating shaft of the rotating member by a shaft parallel to the rotating shaft, and which comprises an elastic member and extends or contracts by itself, and wherein the rotating member rotates in a first direction to move the clutch operating member in a direction of clutch connection, and the elastic expansion member and the clutch operating member bias the rotating member to rotate the same in the first direction in the case where the clutch is put in a connected state.

According to this preferred embodiment, the rotating member is rotationally driven by an actuator such as motor, etc. Supported on the rotating member are a clutch operating member, which is pushed by a push force of a clutch spring and interlocks with the clutch, and an elastic expansion member, which comprises an elastic member and extends or contracts by itself. In the case where a hydraulic cylinder comprising a master cylinder and a clutch release cylinder drives the clutch, the clutch operating member may comprise a rod, which is connected to a piston of the master cylinder and interlocks with the piston. The elastic expansion member may comprise, for example, a coil spring as the elastic member.

When the rotating member rotates in the first direction, the clutch operating member is moved in the direction of clutch connection whereby connection of the clutch is effected. In the case where the clutch is put in a connected state, the elastic expansion member and the clutch operating member bias the rotating member to rotate the same in the first direction, so that it is possible to stabilize the clutch in the connected state.

According to a further embodiment, the rotating member rotates in a second direction reverse to the first direction to move the clutch operating member in a direction of clutch disconnection, and the elastic expansion member and the clutch operating member bias the rotating member to rotate the same in the second direction in the case where the clutch is put in a disconnected state. According to this embodiment, when the rotating member rotates in the second direction, the clutch operating member is moved in the direction of clutch disconnection whereby disconnection of the clutch is effected. In the case where the clutch is put in a disconnected state, the elastic expansion member and the clutch operating member bias the rotating member to rotate the same in the second direction, so that it is possible to stabilize the clutch even in the disconnected state.

Also, according to a further embodiment, the clutch operating member biases the rotating member to rotate the same in the first direction in the case where the clutch is put in a semi-clutched state, the elastic expansion member biases the rotating member to rotate the same in the second direction in the case where the clutch is put in a semi-clutched state, and in the case where the clutch is put in a semi-clutched state, torque, with which the clutch operating member biases the rotating member to rotate the same in the first direction, and torque, with which the elastic expansion member biases the rotating member to rotate the same in the second direction, balance each other. The clutch operating member is biased by the clutch spring and the elastic expansion member also comprises an elastic member, so that it is possible according to this embodiment to stabilize the clutch in the semi-clutched state. That is, in the case where a state of the clutch gets out of the semi-clutched state, the clutch operating member and the elastic expansion member act to restore an original semi-clutched state.

Also, according to a further embodiment, the rotating member comprises integrally therewith a worm wheel that rotates on the rotating shaft, and the actuator comprises a worm gear that meshes with the worm wheel and is rotated by a motor. With such arrangement, the motor rotates to rotate the rotating member whereby it is possible to cause the clutch to perform motions of connection and disconnection. Also, it becomes difficult to rotate the rotating member forcedly from outside, so that a state (clutch opening degree) of the clutch can be maintained when the motor stops.

Also, according to a further embodiment, there is provided a manual rotating part that manually rotates the rotating member. With such arrangement, it is possible to manually perform connection and disconnection of the clutch at need.

Also, according to a further embodiment, a base member fixed to a saddle-ride type vehicle is further provided, and the base member mounts thereon the actuator and the rotating member. Since the clutch operating member and the elastic expansion member are pivotally supported on the rotating member, it is possible according to this embodiment to make a clutch actuator integral, thus enabling facilitating mounting on a saddle-ride type vehicle. In addition, the actuator, the clutch operating member, and the elastic expansion member, respectively, may be formed into a unit. By doing this, it is possible to facilitate assembly and adjustment of a clutch actuator.

Also, the saddle-ride type vehicle according to an embodiment comprises any one of the above clutch actuators. Saddle-ride type vehicles include, for example, motorcycles (include bicycles with a motor (a motorbike)) a scooter), four-wheeled buggies (overall terrain type vehicles), snowmobiles, etc. According to the embodiment, the rotating member is rotationally driven by an actuator such as motor, etc. Supported on the rotating member are a clutch operating member, which is pushed by a push force of a clutch spring and interlocks with the clutch, and an elastic expansion member, which comprises an elastic member and extends or contracts by itself. Therefore, it is possible to rotationally drive the rotating member with a relatively small torque, thus enabling making an actuator such as motor, etc. small in size. As a result, it is possible to lighten a saddle-ride type vehicle and to optimize a weight thereof in balance.

The description above discloses, as a particularly preferred embodiment, in order to provide a clutch actuator capable of stabilizing a state of clutch connection, a rotating member 32 rotationally driven on a rotating shaft 48 by a motor 44, a clutch operating member 34, one end of which is pushed by a push force of a clutch spring and the other end of which is pivotally supported on the rotating member 32 by a shaft 30, and which puts a clutch 10 in a disconnected state against the push force of the clutch spring, an elastic expansion member 22, one end of which is supported on a vehicle side and the other end of which is pivotally supported on the rotating member 32 by a shaft 28, and which comprises a coil spring 20 and extends or contracts by itself, are provided, the rotating member 32 rotates in a first direction to move the clutch operating member 34 in a direction of clutch connection, and the elastic expansion member 22 and the clutch operating member 34 bias the rotating member 32 in the first direction in the case where the clutch 10 is put in a connected state.

## Claims

1. Clutch (10) comprising a clutch actuator (11) for operating the clutch, said clutch actuator (11) comprising a clutch operating member (34) being moveable to put the clutch in a disconnected state or in a connected state, an elastic expansion member (22), and a rotating member (32) being rotatable on a rotating shaft (48), wherein the clutch operating member (34) is rotatable journaled on the rotating member (32) through a rotating shaft (30), the rotating shaft (30) of the clutch operating member (34) is provided parallel and away from the rotating shaft (48) of the rotating member (32) and the clutch operating member (34) and the elastic expansion member (22) are configured to individually exert torque on the rotating member (32), wherein the torques respectively imparted by the clutch operating member (34) and by the elastic expansion member (22) on the rotating member (32) are set such that, when the rotating member (32) rotates in a first direction to move the clutch operating member (34) in a direction of the clutch connected state; the elastic expansion member (22) and the clutch operating member (34) bias the rotating member (32) in the first direction at a rotational position of the rotating member (32), in which the clutch (10) is put in the clutch connected state, and, when the rotating member (32) rotates in a second direction reverse to the first direction to move the clutch operating member (34) in a direction of clutch disconnection, the elastic expansion member (22) and the clutch operating member (34) bias the rotating member (32) to rotate the same in the second direction at a rotational position, in which the clutch (10) is put in the clutch disconnected state, **characterized in that**
in the clutch disconnected state the rotating shaft (48) of the rotating member (32) is positioned on an extension of moving direction of the clutch operating member (34), such that torque imparted to the rotating member (32) by the clutch operating member (34) becomes zero.

2. Clutch according to claim 1, **characterized in that** the clutch operating member (34) and the elastic expansion member (22) are pivotally supported on the rotating member (32) at individual locations separate from a rotating shaft (48) of the rotating member (32), or wherein the clutch operating member is provided as an outwardly extending piston pushing part (88) of the rotating member (84) and the elastic expansion member is pivotally supported on the rotating member (32).

3. Clutch according to claim 1 or 2, **characterized in that** the rotating member (32) is rotatably journaled and is rotationally driven by an actuator (44).

4. Clutch according to one of the claims 1 to 3, **characterized in that** one end of the clutch operating member (34) is pushed by a push force of a clutch spring provided on the clutch (10) and the other end of the clutch operating member (34) is pivotally supported on the rotating member (32) in a position separate from a rotating shaft (48) of the rotating member (32) by a shaft (30) parallel to the rotating shaft (48), wherein the clutch operating member (34) puts the clutch (10) in a disconnected state against the push force of the clutch spring.

5. Clutch according to one of the claims 1 to 4, **characterized in that** one end of the elastic expansion member (22) is supported on a vehicle side and the other end of the elastic expansion member (22) is pivotally supported on the rotating member (32) in a position separate from a rotating shaft (48) of the rotating member (32) by a shaft (28) parallel to the rotating shaft (48), wherein the elastic expansion member (22) comprises an elastic member (20) and extends or contracts by itself.

6. Clutch according to one of the claims 1 to 5, **characterized in that** the clutch operating member (34) biases the rotating member (32) to rotate the same in the first direction at a rotational position, in which the clutch (10) is put in a semi-clutched state,
the elastic expansion member (22) biases the rotating member (32) to rotate the same in the second direction in the case where the clutch (10) is put in a semi-clutched state, and
in the case where the clutch (10) is put in a semi-clutched state, torque, with which the clutch operating member (34) biases the rotating member (32) to rotate the same in the first direction, and torque, with which the elastic expansion member (22) biases the rotating member (32) to rotate the same in the second direction, balance each other.

7. Clutch according to one of the claims 1 to 6, **characterized in that** the rotating member (32) comprises integrally therewith a worm wheel (50) that rotates on the rotating shaft (48), and
the actuator (44) comprises a worm gear (52) that meshes with the worm wheel (50) and is rotated by a motor.

8. Clutch according to one of the claims 1 to 7, **characterized by** further comprising a manual rotating part (33) that manually rotates the rotating member (32).

9. Clutch according to one of the claims 1 to 8, **characterized by** further comprising a base member (70) fixable to a saddle-ride type vehicle, and wherein the base member (70) mounts thereon the actuator (44) and the rotating member (32).

10. Saddle-ride type vehicle comprising the clutch according to one of the claims 1 to 9.

## Patentansprüche

1. Kupplung (10), aufweisend einen Kupplungsbetätiger (11) zum Betätigen der Kupplung, wobei der Kupplungsbetätiger (11) aufweist ein Kupplungsbetätigungsteil (34), das bewegbar ist, um die Kupplung in einen getrennten Zustand oder in einen verbundenen Zustand zu bringen, ein elastisches Ausdehnungsteil (22) und ein Drehteil (32), das auf einer Drehwelle (48) drehbar ist, wobei das Kupplungsbetätigungsteil (34) an dem Drehteil (32) durch eine Drehwelle (30) drehbar gelagert ist, die Drehwelle (30) des Kupplungsbetätigungsteils (34) parallel und weg von der Drehwelle (48) des Drehteils vorgesehen ist und das Kupplungsbetätigungsteil (34) und das elastische Ausdehnungsteil (22) konfiguriert sind, auf das Drehteil (32) individuell ein Drehmoment auszuüben, wobei die Drehmomente, jeweils übertragen durch das Kupplungsbetätigungsteil (34) und durch das elastische Ausdehnungsteil (22) auf das Drehteil (32), derart festgelegt werden, dass dann, wenn das Drehteil (32) sich in einer ersten Richtung dreht, um das Kupplungsbetätigungsteil (34) in eine Richtung des Kupplungseingriffszustandes zu bewegen; das elastische Ausdehnungsteil (22) und das Kupplungsbetätigungsteil (34) das Drehteil (32) in der ersten Richtung in eine Drehposition des Drehteils (32) vorspannen, in der die Kupplung (10) in den verbundenen Zustand gebracht ist, und dann, wenn sich das Drehteil (32) in einer zweiten Richtung entgegengesetzt zu der ersten Richtung dreht, um das Kupplungsbetätigungsteil (34) in eine Richtung des Auskuppelns zu bewegen, das elastische Ausdehnungsteil (22) und das Kupplungsbetätigungsteil (34) das Drehteil (32) vorspannen, um dasselbe in der zweiten Richtung in eine Drehposition zu drehen, in der die Kupplung (10) in den ausgekuppelten Zustand gebracht ist, **dadurch gekennzeichnet, dass**
in dem ausgekuppelten Zustand der Kupplung die Drehwelle (48) des Drehteils (32) in einer Verlängerung der Bewegungsrichtung des Kupplungsbetätigungsteils (34) derart positioniert ist, dass das Drehmoment, übertragen auf das Drehteil (32) durch das Kupplungsbetätigungsteil (34), Null wird.

2. Kupplung nach Anspruch 1, **dadurch gekennzeichnet, dass** das Kupplungsbetätigungsteil (34) und das elastische Ausdehnungsteil (22) auf dem Drehteil (32) an individuellen Orten, getrennt von einer Drehwelle (48) des Drehteils (32), gelagert sind, oder wobei das Kupplungsbetätigungsteil (34) als ein sich nach außen erstreckendes Kolbendrückteil (88) des Drehteils (84) vorgesehen ist und das elastische Ausdehnungsteil auf dem Drehteil (32) drehbar gelagert ist.

3. Kupplung nach Anspruch 1, **dadurch gekennzeichnet, dass** das Drehteil (32) drehbar gelagert ist und durch einen Betätiger (44) drehbar angetrieben wird.

4. Kupplung nach einem der Ansprüche 1 bis 3, **dadurch gekennzeichnet, dass** das ein Ende des Kupplungsbetätigungsteils (34) durch eine Druckkraft einer Kupplungsfeder, vorgesehen an der Kupplung (10), gedrückt wird und das andere Ende des Kupplungsbetätigungsteils (34) auf dem Drehteil (32) in einer Position, getrennt von einer Drehwelle (48) des Drehteils (32) durch eine Welle (30), die zu der Drehwelle (48) parallel ist, drehbar gelagert ist, wobei das Kupplungsbetätigungsteil (34) die Kupplung (10) in einen ausgekuppelten Zustand gegen die Druckkraft der Kupplungsfeder bringt.

5. Kupplung nach einem der Ansprüche 1 bis 4, **dadurch gekennzeichnet, dass** das ein Ende des elastischen Ausdehnungsteils (22) auf einer Fahrzeugseite gelagert ist und das andere Ende des elastischen Ausdehnungsteils (22) auf dem Drehteil (32) in einer Position getrennt von einer Drehwelle (48) drehbar gelagert ist, wobei das elastische Ausdehnungsteil (22) ein elastisches Teil (20) aufweist und sich durch sich selbst ausdehnt oder zusammenzieht.

6. Kupplung nach einem der Ansprüche 1 bis 5, **dadurch gekennzeichnet, dass** das Kupplungsbetätigungsteil (34) das Drehteil (32) vorspannt, um dasselbe in die erste Richtung in eine Drehposition zu drehen, in der die Kupplung (10) in einen halb- gekuppelten Zustand gebracht wird,
das elastische Ausdehnungsteil (22) das Drehteil (32) vorspannt, um dasselbe in der zweiten Richtung in dem Fall zu drehen, wo die Kupplung (10) in einen halbgekuppelten Zustand gebracht wird, und
in dem Fall, in dem die Kupplung (10) in einen halb- gekuppelten Zustand gebracht ist, das Drehmoment, mit dem das Kupplungsbetätigungsteil (34) das Drehteil (32) vorspannt, um dasselbe in die erste Richtung zu drehen, und das Drehmoment, mit dem das elastische Ausdehnungsteil (22) das Drehteil (32) vorspannt, um dasselbe in die zweite Richtung zu drehen, einander ausgleichen.

7. Kupplung nach einem der Ansprüche 1 bis 6, **dadurch gekennzeichnet, dass** das Drehteil (32), damit einstückig, ein Schneckenrad (50) aufweist, das sich auf der Drehwelle (48) dreht, und
der Kupplungsbetätiger (44) ein Schneckenritzel (52) aufweist, das im Kämmeingriff mit dem Schneckenrad (50) ist und durch einen Motor gedreht wird.

8. Kupplung nach einem der Ansprüche 1 bis 7, **gekennzeichnet durch** außerdem aufweisend ein manuelles Drehteil (33), dass manuell das Drehteil (32) dreht.

9. Kupplung nach einem der Ansprüche 1 bis 8, **gekennzeichnet durch** außerdem aufweisend ein Basisteil (70), befestigbar an einem Fahrzeug vom Aufsitz- Typ, und wobei das Basisteil (70) daran den Betätiger (44) und das Drehteil (32) montiert.

10. Fahrzeug vom Aufsitz- Typ, aufweisend die Kupplung nach einem der Ansprüche 1 bis 9.

## Revendications

1. Embrayage (10) comprenant un actionneur d'embrayage (11) pour actionner l'embrayage, ledit actionneur d'embrayage (11) comprenant un élément d'actionnement d'embrayage (34) pouvant être déplacé pour mettre l'embrayage dans un état débrayé ou dans un état embrayé, un élément d'expansion élastique (22), et un élément rotatif (32) capable de tourner sur un arbre rotatif (48), dans lequel l'élément d'actionnement d'embrayage (34) est capable de tourner en étant monté sur l'élément rotatif (32) par l'intermédiaire d'un arbre rotatif (30), l'arbre rotatif (30) de l'élément d'actionnement d'embrayage (34) est prévu parallèle et s'éloignant de l'arbre rotatif (48) de l'élément rotatif (32) et l'élément d'actionnement d'embrayage (34) et l'élément d'expansion élastique (22) sont configurés pour exercer individuellement un couple sur l'élément rotatif (32), dans lequel
les couples respectivement transmis par l'élément d'actionnement d'embrayage (34) et par l'élément d'expansion élastique (22) à l'élément rotatif (32) sont réglés de sorte que, lorsque l'élément rotatif (32) tourne dans une première direction pour déplacer l'élément d'actionnement d'embrayage (34) dans une direction de l'état d'embrayage embrayé, l'élément d'expansion élastique (22) et l'élément d'actionnement d'embrayage (34) sollicitent l'élément rotatif (32) dans la première direction à une position de rotation de l'élément rotatif (32), dans laquelle l'embrayage (10) est mis dans l'état d'embrayage embrayé, et, lorsque l'élément rotatif (32) tourne dans une deuxième direction inverse de la première direction pour déplacer l'élément d'actionnement d'embrayage (34) dans une direction de déconnexion d'embrayage, l'élément d'expansion élastique (22) et l'élément d'actionnement d'embrayage (34) sollicitent l'élément rotatif (32) pour le faire tourner dans la deuxième direction à une position de rotation, dans laquelle l'embrayage (10) est mis dans l'état d'embrayage débrayé, **caractérisé en ce que**
dans l'état d'embrayage débrayé, l'arbre rotatif (48) de l'élément rotatif (32) est positionné sur une extension de la direction de déplacement de l'élément d'actionnement d'embrayage (34), de sorte qu'un couple transmis à l'élément rotatif (32) par l'élément d'actionnement d'embrayage (34) devient nul.

2. Embrayage selon la revendication 1, **caractérisé en ce que** l'élément d'actionnement d'embrayage (34) et l'élément d'expansion élastique (22) sont supportés de manière pivotante sur l'élément rotatif (32) à des emplacements individuels séparés d'un arbre rotatif (48) de l'élément rotatif (32), ou dans lequel l'élément d'actionnement d'embrayage est prévu en tant que partie de poussée de piston (88) s'étendant vers l'extérieur de l'élément rotatif (84) et l'élément d'expansion élastique est supporté de manière pivotante sur l'élément rotatif (32).

3. Embrayage selon la revendication 1 ou 2, **caractérisé en ce que** l'élément rotatif (32) est monté en rotation et est entraîné en rotation par un actionneur (44).

4. Embrayage selon l'une des revendications 1 à 3, **caractérisé en ce qu'**une extrémité de l'élément d'actionnement d'embrayage (34) est poussée par une force de poussée d'un ressort d'embrayage prévu sur l'embrayage (10) et l'autre extrémité de l'élément d'actionnement d'embrayage (34) est supportée de manière pivotante sur l'élément rotatif (32) dans une position séparée d'un arbre rotatif (48) de l'élément rotatif (32) par un arbre (30) parallèle à l'arbre rotatif (48), dans lequel l'élément d'actionnement d'embrayage (34) met l'embrayage (10) dans un état débrayé contre la force de poussée du ressort d'embrayage.

5. Embrayage selon l'une des revendications 1 à 4, **caractérisé en ce qu'**une extrémité de l'élément d'expansion élastique (22) est supportée sur un côté de véhicule et l'autre extrémité de l'élément d'expansion élastique (22) est supportée de manière pivotante sur l'élément rotatif (32) dans une position séparée d'un arbre rotatif (48) de l'élément rotatif (32) par un arbre (28) parallèle à l'arbre rotatif (48), dans lequel l'élément d'expansion élastique (22) comprend un élément élastique (20) et s'étend ou se contracte de lui-même.

6. Embrayage selon l'une des revendications 1 à 5, **caractérisé en ce que** l'élément d'actionnement d'embrayage (34) sollicite l'élément rotatif (32) pour le faire tourner dans la première direction à une position de rotation, dans laquelle l'embrayage (10) est mis dans un état semi-embrayé,
l'élément d'expansion élastique (22) sollicite l'élément rotatif (32) pour le faire tourner dans la deuxième direction dans le cas où l'embrayage (10) est mis dans un état semi-embrayé, et
dans le cas où l'embrayage (10) est mis dans un état semi-embrayé, un couple, avec lequel l'élément d'actionnement d'embrayage (34) sollicite l'élément rotatif (32) pour le faire tourner dans la première direction, et un couple, avec lequel l'élément d'expansion élastique (22) sollicite l'élément rotatif (32) pour le faire tourner dans la deuxième direction, s'équilibrent.

7. Embrayage selon l'une des revendications 1 à 6, **caractérisé en ce que** l'élément rotatif (32) comprend d'un seul tenant avec celui-ci une roue à vis sans fin (50) qui tourne sur l'arbre rotatif (48), et
l'actionneur (44) comprend un engrenage de vis sans fin (52) qui engrène avec la roue à vis sans fin (50) et qui est mis en rotation par un moteur.

8. Embrayage selon l'une des revendications 1 à 7, **caractérisé en ce qu'**il comprend en outre une partie rotative manuelle (33) qui fait tourner manuellement l'élément rotatif (32).

9. Embrayage selon l'une des revendications 1 à 8, **caractérisé en ce qu'**il comprend en outre un élément de base (70) pouvant être fixé à un véhicule du type à selle, et dans lequel l'actionneur (44) et l'élément rotatif (32) sont montés sur l'élément de base (70).

10. Véhicule du type à selle comprenant l'embrayage selon l'une des revendications 1 à 9.
